# EUROPÄISCHE PATENTSCHRIFT

(11) **EP 3 892 062 B1**
(45) Veröffentlichungstag und Bekanntmachung des Hinweises auf die Patenterteilung: **08.04.2026**
(21) Anmeldenummer: 19828224.6
(22) Anmeldetag: 06.12.2019
(51) Int. Cl.: H05B 3/14, H05B 3/34, F24D 13/02

(54) **GESCHÜTZTE INFRAROT-WANDFLÄCHENHEIZUNG MIT FLEXIBLEM HEIZGEWEBE**
PROTECTED INFRARED WALL HEATING WITH FLEXIBLE HEATING FABRIC
CHAUFFAGE MURAL INFRAROUGE PROTÉGÉ AVEC TISSU FLEXIBLE CHAUFFANT

(30) Priorität: 06.12.2018 DE 102018131205
(43) Veröffentlichungstag der Anmeldung: 13.10.2021
(73) Patentinhaber: Slawinski, Alexander, 5442 Fislisbach (CH)
(72) Erfinder: Slawinski, Alexander, 5442 Fislisbach (CH)
(74) Vertreter: Jeck, Anton
(86) Internationale Anmeldenummer: PCT/EP2019/083947
(87) Internationale Veröffentlichungsnummer: WO 2020/115268

(56) Entgegenhaltungen:
- WO-A1-2009/055959
- DE-A1- 102010 008 449
- DE-U1- 202005 006 850

## Beschreibung

Die Erfindung betrifft ein Trockenbauwandelement als Infrarot-Wandflächenheizung mit flexiblem Heizgewebe nach dem Anspruch 1. Sie betrifft den Bereich der Elektrothermie, insbesondere eine Infrarot-Wandflächenheizung mit flexiblem Heizgewebe, die zugleich die Ansprüche des Menschen an die thermische Behaglichkeit als auch an die Ästhetik erfüllt.

Wandflächenheizungen finden hauptsächlich ihre Verwendung als Infrarotheizungen in Wohnräumen, Betriebshallen und anderen ähnlichen Einrichtungen. Wandflächenheizungen sind jederzeit nachrüstbar und besitzen dazu die Eigenschaft, die Wärme in einem hohen Maß in Form von Strahlung abzugeben. Sie werden elektrisch betrieben und sind damit nicht zwingend auf fossile Brennstoffe angewiesen. Dies ist sehr vorteilhaft, da eine Ablehnung von Öl und Gas aufgrund der rasch voranschreitenden Klimaerwärmung immer wahrscheinlicher wird. Wird die elektrische Energie zum Betreiben der Wandflächenheizungen durch Wind- oder Wasserkraft bzw. Solaranlagen erzeugt, steht ein Heizsystem gänzlich ohne schädlichen CO₂-Ausstoß zur Verfügung.

Durch die DE102010008449A1 ist eine geschützte Wandflächenheizung mit flexiblem Heizgewebe bekannt, die auf einem neuartigen flexiblen Infrarot-Heizgewebe basiert und durch Verwendung von überwiegend nichtmetallischen Materialien extrem leicht ist. Eine Heizung der Größe von etwa 1,4 m² wiegt nur 0,8 kg. Besondere Ansprüche an die Wand, an die auch Bilder aufgehängt werden können, liegen nicht vor.

Von der Wandflächenheizung wird die Infrarotstrahlung unmittelbar nach dem Einschalten der Heizung abgestrahlt. Die Wandflächenheizung besitzt nur eine geringe Speichermasse, und die Aufwärmzeit ist sehr kurz. Bereits nach fünf Minuten wird eine Temperatur von 60° C erreicht. Der Nutzer spürt praktisch sofort die angenehme Strahlungswärme.

Weiterhin ist es so, dass die Strahlung den Menschen direkt wärmt. Die Wärme muss also nicht erst noch mittels des Wärmeträgermediums Luft zum Menschen transportiert werden. Somit kann auch die Lufttemperatur deutlich geringer als bei überwiegend konvektiv arbeitenden Systemen sein, wodurch eine merkbare Energieeinsparung erzielt wird.

Es gibt unterschiedliche Infrarot-Heizsysteme, mit denen dies realisiert werden kann. Dazu wird auf die DE202006017492U1, DE202008007359U1, DE202009009228U1, DE10336427A1, DE102007039473A1 und DE 2445334A1 hingewiesen. Bei Fußboden-, Wand- oder Deckenheizungen werden warmwasserführende Rohre in die entsprechenden Raumumschließungsflächen integriert. Die Wärme wird dann über einen Anteil (15 - 30%) in Form von Konvektion unmittelbar an die Umgebung (Luft) abgegeben. Verglichen mit Standardheizkörpern, bei denen das warme Wasser meist durch eine Öl- oder Gasheizung bzw. durch den Einsatz einer Wärmepumpe erzeugt wird, sind die Konvektion und damit die Raumluftbewegung bei Infrarot-Heizsystemen deutlich geringer. Der Einsatz solcher Heizsysteme sollte allerdings bereits bei der Planung des Gebäudes berücksichtigt werden. Zwar ist das Nachrüsten dieser Systeme nicht unmöglich, jedoch ist dieses mit einem erheblichen bautechnischen Aufwand verbunden.

Die Wandflächenheizungen stellen zu den vorgenannten Systemen eine sehr gute Alternative dar. Jede Art von Raum kann jederzeit mit ihnen nachgerüstet werden. Allerdings besitzen die genannten Infrarotheizungen den Nachteil, dass sie aufgrund ihrer Bauweise sehr schwer, unflexibel und vor allem teuer sind. Begründet ist das hohe Gewicht hauptsächlich darin, dass Materialien wie Stahlplatten oder massive Aufbauten, z. B. Stahlbehälter mit Sandfüllungen, verwendet werden. Solche Infrarotheizungen wiegen bis zu 20 kg, und es sind entsprechend tragfähige Wände erforderlich. Weiterhin ist die Herstellung dieser Heizungen durch viele Arbeitsschritte und Handarbeit gekennzeichnet.

Bekannte flexible Kompositionsheizungen weisen deutliche Mängel auf, besitzen eine geringe Lebensdauer, oder das Herstellungsverfahren ist zu kompliziert bzw. zu teuer.

Durch die DE9215471U1 und DE20008737U1 sind Heiztapeten bekannt, die mittels elektrischen Stroms beheizbar sind. Verwendet werden metallische Widerstände. Es werden große Wandflächen von bis zu 10 - 15 m² benötigt, wobei die Heizelemente an Gleichstromquellen mit bis zu 42 V angeschlossen sind. Dadurch werden sehr voluminöse Transformatoren benötigt. Die Anbringung der Heizelemente und Transformatoren erfordert einen großen Arbeitsaufwand. Die Verwendung von Transformatoren führt außerdem zu hohem Elektrosmog, der zu Gesundheitsschäden führen kann, und es können höhere Wartungs- und Reparaturkosten entstehen.

Bekannt ist durch die FR2171335 auch ein Heizverfahren, bei dem das Heizwiderstandselement aus nichtmetallischem Material (z. B. Graphit) und das Verbundmaterial z. B. aus thermoaktivem Harz bestehen. Insbesondere durch die unkontrollierte und ungleichmäßige Auflage der metallischen elektrischen Leiter auf Graphit kann es zu Spannungsspitzen kommen, wodurch dann schließlich die flexible Kompositionsheizung zerstört wird. Sie brennt sozusagen durch. Nur durch aufwändiges Annähen und gezieltes Verpressen der Leiterstreifen ist dieser Mangel bei diesem Verfahren in den Griff zu bekommen. Dadurch wird letztlich die flexible Kompositionsheizung teuer.

Ähnliche Nachteile ergeben sich auch bei einer Kompositionsheizung, die durch die RU2046552 bekannt geworden ist. Bei dieser Kompositionsheizung besteht das Widerstandselement aus einem isolierenden Material (Papier, Stoff oder ähnlichem Material) mit aufgeprägten Kohlenstofffasern. Beim Verpressen der einzelnen Lagen können einige Kohlenstofffasern zerbrechen. Es entsteht ein ungleichmäßiges Temperaturbild. Die Heizleistung ist bei jeder nach diesem Verfahren hergestellten flexiblen Kompositionsheizung unterschiedlich. Weiterhin ist der Kontakt zwischen den metallischen elektrischen Leitern und dem Gewebe aufgrund der Unebenheit des Gewebes als eher schlecht einzustufen. Lufteinschlüsse können nicht ausgeschlossen werden, die dann später zu Blasenbildung an der Oberfläche der flexiblen Kompositionsheizung führen. Das Verfahren nach der RU2046552 kommt auch nicht ohne Handarbeit aus. Ferner ergeben sich unterschiedliche Arbeitsflächentemperaturen bei Kohlenstofffasern (Vlies) und metallischen Leitungen (Kupfer), die zu Lufteinschlüssen und dann zu Kurzschlüssen führen.

Zwar wurde der Nachteil des schlechten Kontakts der metallischen elektrischen Leiter mit der flexiblen Kompositionsheizung entsprechend der RU2088049 durch Galvanisieren der elektrischen Leiter auf das Widerstandselement gelöst, jedoch ist dieses Verfahren extrem aufwändig. Gängige Materialien, wie Vlieskohlenstoffpapiere als Widerstandselement, können nicht verwendet werden, da sie beim Galvanisiervorgang beschädigt werden.

Zusammenfassend kann behauptet werden, dass die oben beschriebenen flexiblen Kompositionsheizungen erhebliche Nachteile besitzen.

Durch die DE102007039473A1 ist aber auch bereits eine Beheizung von Oberflächen an Sandwichelementen und Verbundwerkstoffen bekannt, bei der die Erwärmung der Oberflächen unter Verwendung eines speziellen Glasfasergewebes erfolgt, das mit Kohlenstofffasern als Heizgewebe durchzogen ist, und bei der die Kohlenstofffasern durch Stromzufuhr erwärmt werden.

Durch die DE202009003858A1 ist ferner ein Heizgewebe aus Schuss- und Kettfäden bekannt, wobei ein Teil der Schussfäden und/oder Kettfäden aus flexiblen leitfähigen Kohlenstofffasern besteht. Ein weiterer Teil der Schussfäden und/oder Kettfäden besteht aus flexiblen synthetischen Fasern, die im Gewebe eine Stützfunktion erfüllen. Zur Energiespeisung besteht ein dritter Teil der Schussfäden und/oder Kettfäden aus Metallfäden, die mit einer Stromquelle gekoppelt sind.

Ferner ist durch die DE758724 ein elektrischer Heizkörper bekannt, der aus einem Gewebe besteht, in das elektrische Heizdrähte eingebracht sind und bei dem der Träger der Drähte aus Glasfasern besteht.

Schließlich sind auch Infrarot-Heizungen durch die DE202006017492U1, DE202008007358U1, DE202009009228U1, DE10336427A1 und DE2445334A1 bekannt. So weist die DE2006017492U1 eine Infrarot-Wandflächenheizung nach dem Oberbegriff des Anspruchs 1 auf. Diese Heizung ist jedoch in einem Rahmen eingebaut, der auf eine Wand montiert wird, und ist mechanischen Beschädigungen ausgesetzt. Sie kann auch nur nach DIN-Norm an einer Spannung bis zu 42 V betrieben werden und erfordert daher schwere Transformatoren zur Spannungsherabsetzung vom örtlichen Stromversorgungsnetz.

DE 20 2005 006850 U1 offenbart einen Wandaufbau für einen Gebäudeinnenraum mit elektrisch betreibbaren Flächenheizelementen.

Die Aufgabe der Erfindung besteht darin, ein Trockenbauelement zu schaffen, mit dem die oben angeführten Nachteile beseitigt sind und mit dem einerseits ein sicherer Kontakt der Metallleiter mit den Kohlenstofffäden und andererseits ein wirksamer Schutz des Heizelements erreicht werden.

Diese Aufgabe wird durch die Merkmale des Anspruchs 1 gelöst.

Das Heizelement ist hierbei ein Glasfadengewebe mit eingewebten Kohlenstofffäden, zu denen die Metallleiter quer verlaufen und diese fest umschlingen. Ferner ist das Heizelement beidseitig durch jeweils mindestens zwei weitere Schichten aus Isolationsfolie elektrisch geschützt. Ferner sind insbesondere für den mechanischen Schutz zusätzliche Schichten aus Vlies und Stoff vorgesehen. Der Schutz ist derart gestaltet, dass eine Beschädigung des Heizelements beim Versuch, Nägel oder Schrauben am Heizelement anzubringen, nicht möglich ist. Die zusätzlichen Schichten werden auf beiden Seiten der Wandflächenheizungen angebracht und beispielsweise zusammen mit den anderen Schichten verklebt.

Gemäß einer weiteren Ausbildung der Erfindung sind die Wandheizelemente direkt an eine Stromquelle von 230/110 V angeschlossen und an einer Wand montiert bzw. unter Putz an einer Wand verlegt.

Gemäß einer weiteren vorteilhaften Ausbildung der Erfindung bestehen die Kohlenstofffäden aus fast 100% Kohlenstoff.

Gemäß einer weiteren Ausbildung der Erfindung liegt die Wellenlänge im Bereich von 10 µm. Damit sind die besten Voraussetzungen für Wärmeaufnahme und Behaglichkeit erfüllt. Diese Wellenlänge ist der entscheidende Faktor für die Entfernung von spürbarer Wärme.

Durch die Erfindung wird eine neue Art des Heizens offenbart, man sieht keine Heizung, sie ist platzsparend, hat niedrige Kosten, und es gibt keinen CO₂-Ausstoß. Die Heizplatte mit dem integrierten Infrarot-Heizelement kann wie eine handelsübliche Gipskartonplatte eingebaut werden. Das erfindungsgemäße Heizelement/ Wandflächenheizung ist daher als Trockenbauwandelement ausgebildet und nach der vorliegenden Erfindung als solche bezeichnet werden. Ein solches Wandelement kann auch eine entsprechende erfindungsgemäße Wandflächenheizung aufweisen. Diese kann im installierten Zustand vorzugsweise an der Oberfläche bündig mit benachbarten Gipsplatten oder anderen Wandoberflächen bildenden Baustoffen vorliegen.

Erfindungsgemäß weist das Trockenbauwandelement auf seiner Oberfläche Putz, Verbundsteine oder Fermentfaserplatten auf. Welche die Funktionalität der Wandflächenheizung nicht beeinträchtigen. Somit kann die Wandflächenheizung vollständig unsichtbar in eine Wand integrierbar sein.

Erfindungsgemäß bildet das Trockenbauwandelement also ein integralen/struktureller Teil einer Wand beziehungsweise seiner Oberfläche. Beispielsweis kann das Wandelement anschließend einen Teil der (verputzen) Wand bilden. Ein solches Wandelement kann auch als Wandflächenheizung gemäß der vorliegenden Erfindung bezeichnet werden oder eine solche zumindest aufweisen. Erfindungsgemäß weist ein solches Wandelement Bereiche auf, welche eine übliche Verankerung des Wandelements erlauben. Dies können beispielsweise Gipsbereiche oder sonstige strukturelle Verankerungsbereiche sein. Diese können bevorzugt am Rand des Wandelements vorgesehen sein und beispielsweise eine Verschraubung des Wandelements an eine darunter liegende Struktur bereitstellen.

Das Wandelement kann bündig zur Wand bzw. zur Decke oder mit einem minimalen Abstand von etwa 5 mm von der Wand eingebaut werden. Die Heizelemente sind alle gleich.

Da sich vorzugsweise eine Isolierfolie hinter dem Heizelement befindet, hat die Heizung keine Verluste über eine hintere Abstrahlung sowie einen höchsten Strahlungsanteil fast nur nach vorn und damit eine höchste Wirkung und eine geringe Konvektion bei voller Wirkung. Das Heizelement kann auf mehrere Felder aufgeteilt sein Dies kann dabei helfen, wenn jemand mit einer Schraube oder einem Nagel die Heizung penetriert, dass die Heizung nicht zerstört wird und der Eintreiber keinen Stromschlag erhält. Die Stärke der Kohlenfäden (nichtmetallische Widerstände) liegt vorzugsweise zwischen 35 und 200 tex. Es gibt keinen Elektrosmog.

Zwischen den Feldern kann eine tragende Struktur bereit gestellt sein, welche ausgebildet ist das Heizelement, welches auch als infrarot Wandflächenheizung bezeichnet werden kann, über die Verschraubung auf einer darunter befindlichen Struktur, beispielsweise einer Trockenbauverschalung oder eine Trägerelement, haltend zu befestigen. Diese kann ein Strukturgewebe und/oder einen Festen Baustoff wie beispielsweise Gips aufweisen.

Als Trägerplatte können vorzugsweise Gipskarton- oder Holzplatten verwendet werden, die eine minimale Dehnung bei der Erwärmung haben. Als Trägermaterial können nicht nur Glasfäden, sondern auch Steinfäden o. ä. verwendet werden, die eine Temperaturverträglichkeit von etwa 100° C aufweisen. Die Arbeitsflächentemperatur beträgt etwa 60 - 65° C. Dadurch besteht keine Verbrennungsgefahr. Das sind die besten Voraussetzungen für die Behaglichkeit. In Bezug auf Gesundheits- und Umweltaspekte ist die Erfindung unschlagbar.

Die Wandflächenheizung kann an der Wand entweder verklebt oder mit entsprechenden handelsüblichen Aufhängern aufgehängt werden. Die Wandflächenheizung ist durch die Verwendung von nichtmetallischen Materialien extrem leicht. Eine Wandflächenheizung mit einer Größe von 1,4 m² und einem Gewicht von 0,8 kg wird bevorzugt verwendet. Die Wandflächenheizung ist derart ausgebildet, dass sie aufgrund der geringen Speichermasse eine Aufwärmzeit von nur fünf Minuten bis auf eine Temperatur von 60° C benötigt.

Weiterhin werden nur qualitativ hochwertige Materialien und Elemente verwendet, die industriell verfügbar sind und maschinell weiterverarbeitet werden können. Demgemäß können die Wandflächenheizungen auf dem Band gefertigt werden.

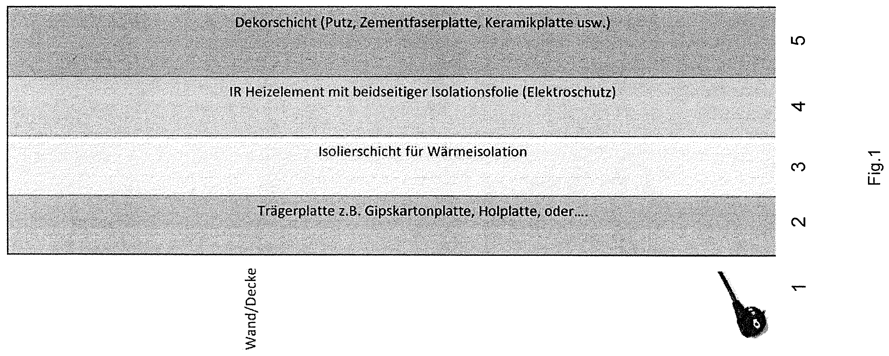

Die Erfindung wird nun anhand eines Ausführungsbeispiels näher erläutert. In der einzigen Figur ist der Aufbau (ein Schnitt) einer Infrarot-Wandflächenheizung gezeigt. Die Heizung besteht vorzugsweise aus vier übereinanderliegenden Hauptebenen, von denen die obere Ebene und die untere Ebene Isolationsebenen 3, 5 sind und die mittlere Ebene eine Heizelementebene 4 ist. Die Isolationsebenen 3, 5 sind nicht näher dargestellt. In diesen sind jeweils 3 oder mehr Schichten aus Isolationsfolie bzw. Stoff oder Vlies angeordnet.

In der Heizelementebene 4 ist als Basismaterial ein Glasfadengewebe verwendet, in das Kohlenstofffäden eingewebt sind. Quer zu diesen Kohlenstofffäden sind in das Glasfasergewebe metallische elektrische Leiter in Form von Metallfäden an beiden Seiten eingewebt. Dabei umschlingen die Metallfäden die Kohlenstofffäden fest. Die Metallfäden sind vorzugsweise an Verbindungsstellen mit Anschlussleitungen verbunden, an die ein Anschlussstecker 6 angeschlossen sein kann. Über diesen Stecker wird dem Heizelement eine Spannung von 230/110 V zugeführt. Die Metallfäden, die Kohlenstofffäden und das Glasfadengewebe sind dabei so locker aufgebaut, dass ein totaler Ausfallschaden durch Nägel usw. nicht möglich ist.

Wenn die Wandflächenheizung eingeschaltet wird, kann die Infrarotstrahlung unmittelbar danach unter einem Winkel von vorzugsweise 180° abgestrahlt werden, und es erfolgt eine Erwärmung auf 60° C innerhalb von weniger als fünf Minuten, weil die Wandflächenheizung nur eine geringe Speichermasse besitzt. Typischerweise beträgt die Arbeitsflächentemperatur 65 - 70° C. Die Wärme wird im Bereich einer Wellenlänge von 8 - 10 µm ausgestrahlt. Damit sind die besten Voraussetzungen für Wärmeaufnahme und Behaglichkeit erfüllt. Der Nutzer spürt praktisch sofort die angenehme Strahlungswärme.

Lufteinschlüsse, örtliche Spannungsspitzen und Schwankungen in der Heizleistung sind ausgeschlossen, ebenso ein Durchbrennen der flexiblen Infrarot-Wandflächenheizung sowie Blasenbildungen an der Oberfläche. Ein Zusammenschrumpfen des Heizgewebes kann nicht stattfinden, da als Basisgewebe Glasfäden verwendet werden.

Ein derartiges Wandflächenheizelement hat typischerweise eine Größe von nur 1 - 1,4 m² und ein Gewicht von weniger als 1 kg. Es kann als Bild an einer Wand 1 angebracht, beispielsweise angeklebt oder aufgehängt sein. Es kann aber auch die ganze Wand ausfüllen und damit nur eine Bahn bilden.

Vorzugsweise kann es vorgesehen sein, dass die erfindungsgemäße Wandflächenheizung eine Oberfläche von bis zu 2 m x 0,65 m aufweist, dabei jedoch vorzugsweise eine Leistungsaufnahme aufweist, welche so gering ist, wie handelsübliche Flächenheizungen mit halber Oberfläche (z.B. nur 630 Watt).

Die erfindungsgemäße Wandflächenheizung kann auch ohne Abstandhalter an/in die Wand eingeputzt oder mit verschiedenen Blenden- Materialien (besonders Stoff) an der Wand angebracht werden. Eine Wandflächenheizung, die ohne Abstand zur Wand vorgesehen ist, ist bisher nicht bekannt. Dadurch kann insbesondere erreicht werden, dass die Heizung nur nach vorne ohne Konvektion (oder Konvektionsarm) abstrahlt.

Vorzugsweise wird dies insbesondere dadurch erreicht, dass dünne Kohlenstoffasern (vorzugsweise zwischen 20 und 75 tex, bevorzugt kleiner 75 tex). Die Kohlenstofffasern können dabei eine besondere Robustheit aufweisen.

Weiterhin kann eine Anzahl von Silberfäden in das Gewebe der 3,4, und /oder 5 Ebene eingearbeitet sein, deren Anteil an der Gesamtzahl von Fasern in der Schicht im Bereich vom X % vorgesehen ist.

Für eine vollflächige Abstrahlung von Wärmestrahlung kann es vorgesehen sein, dass (groß)flächige Heizfelde(r) von Heizleitern angeordnet sind, welche auf 2, 3, 4, 5 oder mehr Bahnen aufgeteilt sind. Dies kann einer verbesserten Wärmeaufteilung zuträglich sein.

Besonders bevorzugt ist eine flexible Folie vorgesehen, welche als elektrisch sicher, insbesondere als Isolator vorsehen sein kann. Dadurch kann beispielsweise ein Trafo-freier Betrieb der Wandheizung bei beispielsweise 240 V/ 110 V ermöglicht s Der Effekt der erfindungsgemäßen Vorteile besteht beispielsweise darin, dass eine Anbringung direkt an die Wand ermöglicht ist und/oder größeren Flächen mit einem Wärmebedarf von beispielsweise bis zu 20Watt/m² im Neubau und 40Watt/m² Altbau weniger realisierbar sind.

## Patentansprüche

1. Trockenbauwandelement als Infrarot-Wandflächenheizung mit
- flexiblem Heizgewebe, bei der als Heizgewebe ein Glasfadengewebe vorgesehen ist, in das Kohlenstofffäden als Heizelement und metallische elektrische Leiter eingewebt sind, wobei die metallischen elektrischen Leiter quer zu den Kohlenstofffäden an beiden Enden des Heizelements liegen und die Kohlenstofffäden fest umschlingen und das Heizelement (4) beidseitig durch jeweils eine Schicht aus Isolationsfolie (3, 5) elektrisch geschützt ist,
- mindestens jeweils zwei weitere Schichten (3, 5) aus Isolierfolie und
- eine zusätzliche Schicht aus Vlies und Stoff beidseitig für insbesondere den mechanischen Schutz des Heizelements vorgesehen sind die Oberfläche des Trockenbauwandelements Putz, Verbundsteine oder Fermentfaserplatte aufweist,
- das Trockenbauwandelement weist strukturelle Verankerungsbereiche auf, wobei das Trockenbauwandelement bereitgestellt ist, einen integral strukturellen Teil einer Wand zu bilden.

2. Infrarot-Wandflächenheizung nach Anspruch 1,
**dadurch gekennzeichnet,**
**dass** die Wandheizungselemente direkt an eine Stromquelle von 230/110 V angeschlossen sind und an einer Wand, insbesondere unter Putz, verlegt sind.

3. Infrarot-Wandflächenheizung nach Anspruch 1 oder 2,
**dadurch gekennzeichnet,**
**dass** die Kohlenstofffäden aus fast 100 % Kohlenstoff bestehen.

4. Infrarot-Wandflächenheizung nach einem der Ansprüche 1 bis 3,
**dadurch gekennzeichnet,**
**dass** das Wandflächenheizelement im Bereich einer Wellenlänge von 10 µm ausstrahlt.

## Claims

1. A dry construction wall element as an infrared wall surface heater with
- a flexible heating fabric, wherein a glass thread fabric is provided as the heating fabric, into which carbon threads as a heating element and metallic electrical conductors are woven, wherein the metallic electrical conductors lie transversely to the carbon threads at both ends of the heating element and tightly wrap around the carbon threads and the heating element (4) is electrically protected on both sides by a layer of insulation film (3, 5) in each case,
- at least two further layers (3, 5) of insulating film in each case and
- an additional layer of fleece and fabric on both sides are provided in particular for the mechanical protection of the heating element, wherein the surface of the dry construction wall element has plaster, composite stones or ferment fibre board,
- the dry construction wall element has structural anchoring areas, wherein the dry construction wall element is provided to form an integral structural part of a wall.

2. An infrared wall surface heater according to claim 1,
**characterised in that**
the wall heating elements are connected directly to a power source of 230/110 V and are installed on a wall, in particular under plaster.

3. An infrared wall surface heater according to claim 1 or 2,
**characterised in that**
the carbon threads consist of almost 100% carbon.

4. An infrared wall surface heater according to any one of claims 1 to 3,
**characterised in that**
the wall surface heating element radiates in the range of a wavelength of 10 µm.

## Revendications

1. Élément de paroi de construction sèche en tant que chauffage de surface murale à infrarouge comprenant
- un tissu chauffant flexible, dans lequel un tissu de fil de verre est prévu comme tissu chauffant, dans lequel des fils de carbone en tant qu'élément chauffant et des conducteurs électriques métalliques sont tissés, dans lequel les conducteurs électriques métalliques sont disposés transversalement aux fils de carbone aux deux extrémités de l'élément chauffant et enveloppent étroitement les fils de carbone et l'élément chauffant (4) est protégé électriquement des deux côtés par une couche de film isolant (3, 5) dans chaque cas,
- au moins deux couches supplémentaires (3, 5) de film isolant dans chaque cas et
- une couche supplémentaire de non-tissé et de tissu des deux côtés sont prévues en particulier pour la protection mécanique de l'élément chauffant, dans lequel la surface de l'élément de paroi de construction sèche présente du plâtre, des pierres composites ou un panneau de fibres fermentées,
- l'élément de paroi de construction sèche présente des zones d'ancrage structurel, dans lequel l'élément de paroi de construction sèche est prévu pour former une partie structurelle intégrante d'une paroi.

2. Chauffage de surface murale à infrarouge selon la revendication 1,
**caractérisé en ce que**
les éléments de chauffage mural sont connectés directement à une source d'alimentation de 230/110 V et sont installés sur une paroi, en particulier sous le plâtre.

3. Chauffage de surface murale à infrarouge selon la revendication 1 ou 2,
**caractérisé en ce que**
les fils de carbone sont constitués de presque 100 % de carbone.

4. Chauffage de surface murale à infrarouge selon l'une quelconque des revendications 1 à 3,
**caractérisé en ce que**
l'élément de chauffage de surface murale rayonne dans la plage d'une longueur d'onde de 10 µm.
